# EUROPEAN PATENT SPECIFICATION

(11) **EP 0 358 327 B1**
(45) Date of publication and mention of the grant of the patent: **26.05.1993**
(21) Application number: 89307865.9
(22) Date of filing: 02.08.1989
(51) Int. Cl.: B60C 11/01

(54) **A radial tyre**
Radialreifen
Pneumatique radial

(30) Priority: 11.08.1988 JP 202558/88
(43) Date of publication of application: 14.03.1990
(73) Proprietor: SUMITOMO RUBBER INDUSTRIES, CO. LTD, Chuo-ku Kobe-shi Hyogo-ken 651 (JP)
(72) Inventor: Numata, Kazuki, Nishinomiya-shi Hyogo-ken (JP); Ochiai, Kiyoshi, Tarumi-ku Kobe-sho Hyogo-ken (JP)
(74) Representative: Stewart, Charles Geoffrey

(56) References cited:
- EP-A- 0 256 247
- EP-A- 0 280 847
- EP-A- 0 285 695
- GB-A- 2 118 910

## Description

The present invention relates to a radial tyre.

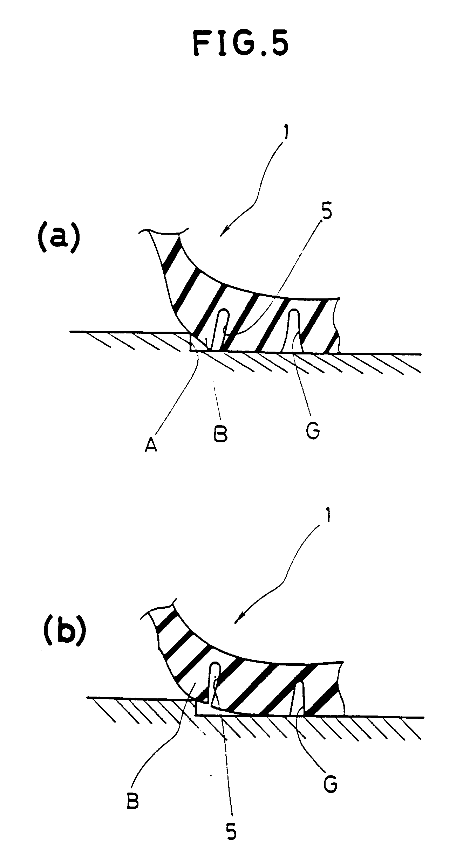

In a radial tyre in which a belt reinforcement layer, for example, a steel cord layer is disposed radially outwardly of the carcass, the rigidity of the tread portion is higher in the shoulder regions due to the hoop effect of the belt reinforcement and also the thicker tread rubber. Accordingly, the shoulder regions largely effect the occurrence of vehicle wander when running on a road having a surface which is partially inclined to the side. Further, for example, when such a tyre mounted on a steerable wheel of a vehicle runs across a step difference A in a road such as a rut, a railway line or the like as shown in Figure 5(a), if the side of the tyre shoulder B bumps against the step A, the tyre T moves away from its intended path and the vehicle cannot ride over the step difference without being given more steerage.

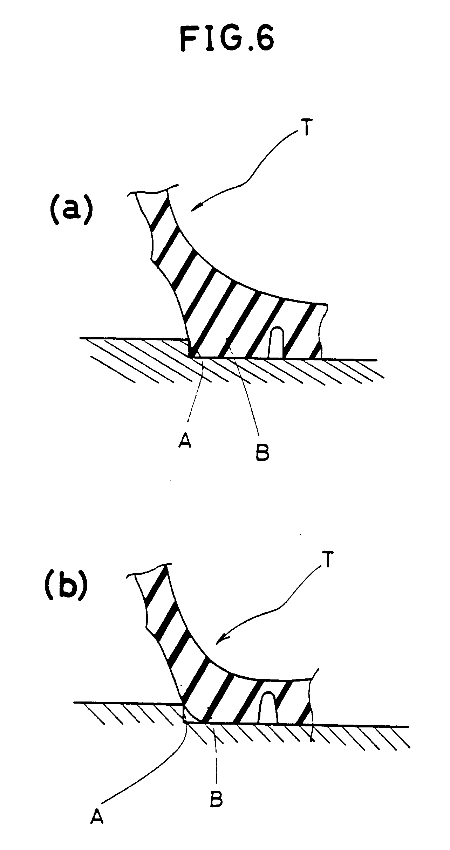

To avoid this it has previously been proposed to round the tyre shoulder B as shown in Figure 6(b) or to form axial sipes in the tyre shoulder B to reduce the rubber rigidity thereof.

In the case of the former, however, the high rigidity of the tyre shoulder still produces a wandering phenomenon and also a rather strong reaction to the riding-over operation, which worsens the ride.

In the case of the latter proposal uneven wear such as the so-called heel and toe wear is apt to be produced in the tread shoulder regions, which shortens the tyre life.

A tyre according to the preamble of claim 1 is known, e.g. from US-A-4 724 878.

It is an object of the present invention to provide a radial tyre in which the occurrence of vehicle wandering is effectively prevented without producing uneven wear in the tread shoulder regions.

In order to achieve the above-mentioned object, a radial tyre is provided according to the present invention comprising a tread portion provided with wide main grooves and narrow grooves extending circumferentially of the tyre, said narrow grooves having axially outer groove sidewalls and being disposed in a boundary region between said tread portion and an adjacent buttress portion, said narrow grooves being inclined axially inwards at the bottom by an angle β, and the tread surface and the surface of the adjacent buttress portion crossing each other to form an intersection point, characterised in that said angle β is in the range of 0 to 5 degrees to the normal direction of the tread surface and the radially outer edge of the axially outer groove sidewall of the narrow groove is positioned at the intersection point.

An embodiment of the present invention will now be explained in detail with reference to the attached drawings in which:
Figure 1 is a perspective view showing an embodiment of the present invention;
Figure 2 is a plan view showing the tread;

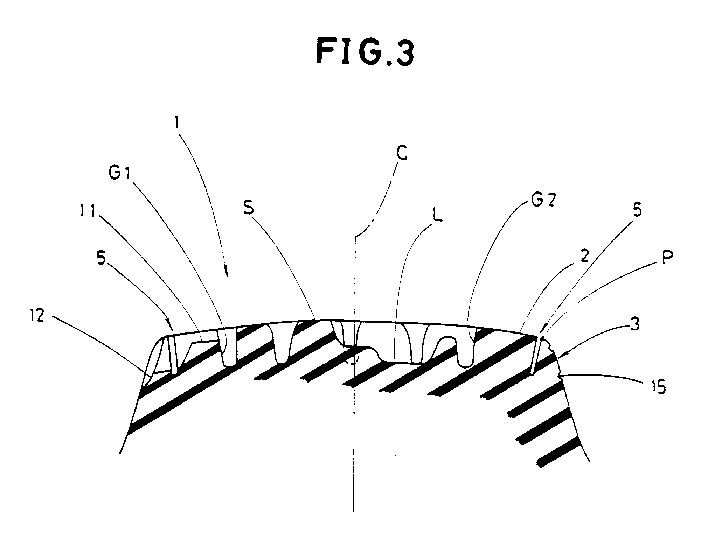

Figure 3 is a sectional view taken along a line I-I in Figure 2;
Figure 4 is an enlarged sectional view showing the narrow groove;
Figures 5(a) and (b) are schematic sectional views showing the operation of the invention; and
Figures 6(a) and (b) are sectional views showing prior art tyres.

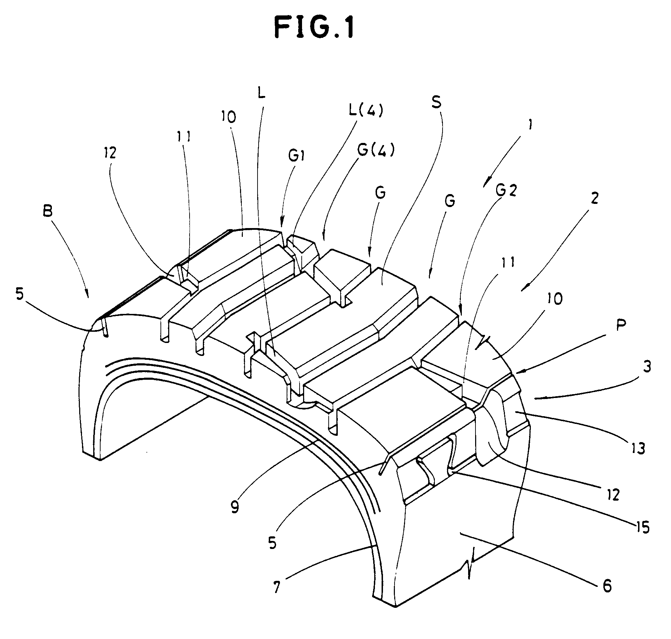

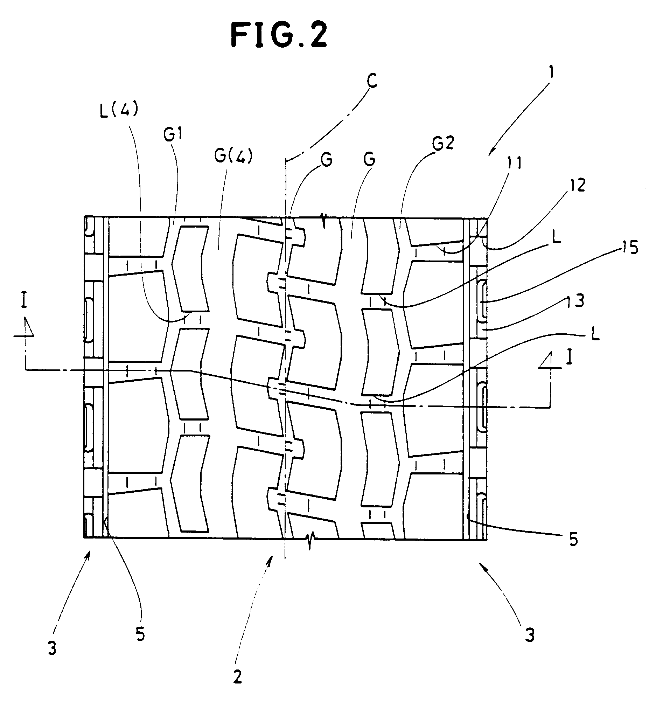

In Figures 1 and 2, a radial tyre 1 has a tread portion 2 and a pair of sidewalls 6 extending to beads (not shown). A radial ply carcass 7 extends between the bead portions through the sidewalls 6 and the tread portion 2. The tread 2 is reinforced by a breaker comprising at least one belt layer 9 between the carcass 7 and the tread 2 composed of layers of steel cord fabric or the like.

The tread portion 2 is provided with tread grooves 4 to form an all-season type tread pattern which changes from a block pattern to a rib pattern as tread wear progresses.

In this embodiment, therefore, the tread grooves 4 include five longitudinal main grooves G, G1, G2 extending in a zigzag fashion in the circumferential direction of the tyre, lateral grooves L laid across the longitudinal grooves G, and shoulder lateral grooves 11.

The shoulder lateral grooves 11 extend axially across the shoulder ribs 10 which are formed axially outside the outermost longitudinal grooves G1 and G2 to divide them each into a row of shoulder blocks.

The groove depths of the main grooves, G, G1 and G2 are identical to each other, and are deeper than the lateral grooves L and 11, so that the tread pattern changes from a block pattern to a rib pattern as tread wear progresses.

The tread portion 2 is connected to the sidewalls 6 by buttress portions 3.

The buttress portions 3 are provided with radiation grooves 12 extending axially of the tyre and connected to the shoulder lateral grooves 11. Furthermore, each buttress 3 is provided with a circumferentially extending wide, shallow groove 13 in which in narrow, shallow groove 15 is formed as a continuous groove having a winding path in the circumferential direction of the tyre, to increase heat radiation from the buttress region 3.

In a boundary region between the tread portion 2 and each buttress portion 3, a circumferentially extending narrow groove 5 is formed at a position near the intersection P between the surface of the tread portion 2 and the surface of the buttress portion 3, in other words, the edge of the ground contacting area of the tread.

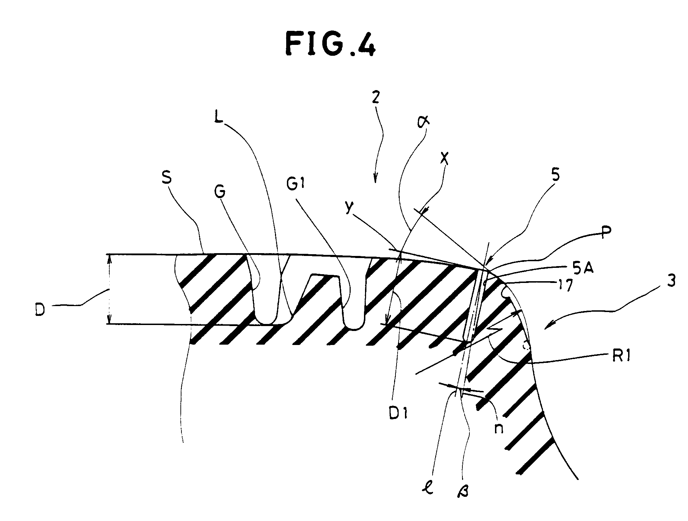

In this embodiment, the radially outer edge of the axially outer groove sidewall 5A is positioned at and along the above mentioned intersection P, as shown in Figure 4.

Also the centre line 1 of the narrow groove 5 is inclined axially inwardly at the bottom of the groove by an angle (beta) which is between 0 to 5 degrees with respect to the normal line n drawn perpendicular to the tread surface S from the above-mentioned position near to the intersection P in order to prevent tear failure.

The groove width of the narrow groove 5 is set to be less than 5mm and more preferably about 2mm.

The ratio D1/D of the groove depth D1 from the tread surface S to the groove bottom, to the groove depth D of the longitudinal main grooves is set to be 0.8 to 1.1.

By forming the narrow groove 5 in the above-mentioned form, the rigidity of the tread rubber is reduced in the shoulder regions B, thereby effectively suppressing the occurrence of vehicle wander.

Further, as the narrow groove 5 extends circumferentially of the tyre, it does not produce the so-called heel and toe wear.

Further more, as shown in Figure 5(a) and 5(b), when the tyre 1 rides across a step difference A on a road, the tyre shoulder B is easily deformed, which produces less reaction force.

As to the form of the buttress portion, the tangent X to the buttress portion 3 at the intersection P is inclined at an angle (alpha) between 25 and 35 degrees with respect to the tangent Y to the tread portion 2 at the same intersection O.

Also the contour of the buttress portion adjacent to the intersection P is formed in a circular arc having a radius R1 of 15 to 35mm.

Thus, a part of the buttress portion 3 adjacent to the intersection P, that is the tyre should B is formed in a curved form having a specified radius and inclination angle, which makes it able to easily ride over a step difference A on a road.

On the other hand, the above-mentioned ranges for the inclination angles (alpha), (beta), the radius R1 and the ratio D1/D were proved by various tests by the inventors.

In each of the tests for which results are respectively shown in Tables 1 to 4, the above-mentioned factors were identical through the test tyres except for the single concerned factor as specified.

The test tyres were mounted on the front wheels of a 2-D type truck, and then, running at a speed of 80km/h under the specified load, the wandering phenomenon and the stability were evaluated on a scale of 100 by driver feeling. The larger the index, the better the performance.

As shown in Tables 1 to 4, when the inclination angle (beta) was less than 0 degress or larger than 5 degrees, the decrease in the rigidity of the tyre shoulder B was insufficient, and the wandering performance and the stability became poor. In particular, if it was smaller than 0 degrees the portions 17 formed outside the narrow groove 5 became thin in the rubber thickness at the base part thereof, and that part was weakened to cause a tear failure.

When the inclination angle (alpha) was smaller than 25 degrees and the radius R1 was smaller than 15mm, the ability to ride over a difference A became poor.

On the other hand, if (alpha) was made larger than 35 degrees and the radius R1 larger than 35mm, the self-alignment torque decreased, thereby deteriorating stability during straight running and cornering.

Further, when the ratio D1/D was less than 0.8, the rigidity of the shoulder region B did not decrease sufficiently and when it was over 1.1, the rigidity became too low, thereby deteriorating stability and inducing the occurrence of rib tear failure.

Further test tyres of size 750R16 were then made to show the comparison to known tyres. They were manufactured according to the specification shown in Table 5, and their performance as to vehicle wandering and stability were evaluated by the vehicle test.

The test tyres, inflated to 7.0kg/sq.cm, were mounted on a 4-ton truck. Then, the wandering phenomenon and the stability were evaluated on a 100 point scale by the test driver's feeling, running at speed 100 km/h under the specified load.

The stability was evaluated from stability in straight running, steering response whether heavy or not and quick or slow, smoothness when changing a lane, damping and road grip and so on.

It is apparent from Table 5 that Ex.1-4 tyres which are those made according to the present invention were superior in both aspects of stability and wandering phenomenon to the reference tyre according to the prior art and tyres 2-4.

As described above, in the present invention, a radial tyre provided with a narrow groove near the tread edge has the rigidity of the tyre shoulder lowered, whereby vehicle wandering is effectively suppressed to improve running stability, and shock when riding over a rut was alleviated to improve the ride.

**TABLE 1**

| Angle β° | Wandering | Stability | |
|---|---|---|---|
| -5 | 90 | 87 | α = 30 degs. |
| 0 | 97 | 97 | |
| 5 | 97 | 100 | R1 = 20 mm |
| 10 | 90 | 90 | D1/D= 1.0 |

**TABLE 2**

| Angle α° | Wandering | Stability | |
|---|---|---|---|
| 15 | 90 | 90 | |
| 25 | 97 | 97 | β = 2 degs. |
| 35 | 100 | 97 | R1 = 20 mm |
| 40 | 94 | 87 | D1/D= 1.0 |

**TABLE 3**

| R1 (mm) | Wandering | Stability | |
|---|---|---|---|
| 10 | 87 | 97 | α = 30 degs. |
| 15 | 100 | 100 | β = 2 degs. |
| 35 | 97 | 97 | |
| 45 | 90 | 90 | D1/D= 1.0 |

**TABLE 4**

| D1/D | Wandering | Stability | |
|---|---|---|---|
| 0.5 | 87 | 87 | α = 30 degs. |
| 0.8 | 97 | 97 | β = 2 degs. |
| 1.0 | 97 | 97 | R1 = 20 mm |
| 1.2 | 94 | 90 | |

**TABLE 5**

| | Reference ---- | | | | Working Example | | | |
|---|---|---|---|---|---|---|---|---|
| | 1 | 2 | 3 | 4 | 1 | 2 | 3 | 4 |
| Angle α ( ° ) | 30 | 20 | 40 | 30 | 30 | 35 | 30 | 25 |
| Angle β ( ° ) | - | 5 | 6 | -2 | 2 | 2 | 2 | 5 |
| Radius R1 (mm) | 20 | 10 | 45 | 20 | 20 | 20 | 15 | 15 |
| Ratio D1/D | - | 1.2 | 0.7 | 1.0 | 1 | 0.8 | 1 | 1.1 |
| Stability | 93 | 94 | 95 | - | 100 | 100 | 97 | 99 |
| Wandering | 93 | 94 | 95 | - | 97 | 97 | 100 | 97 |
| Amount of drift | 93 | 94 | 95 | - | 97 | 97 | 100 | 97 |
| Speed of drift | 93 | 94 | 95 | - | 97 | 97 | 100 | 97 |
| Damping | 93 | 96 | 97 | - | 97 | 100 | 100 | 97 |
| Handle response | 86 | 93 | 94 | - | 97 | 97 | 100 | 97 |
| Shoulder rubber tear occurred/not | no | no | no | yes | no | no | no | no |

## Claims

1. A radial tyre comprising a tread portion (2) provided with wide main grooves (G,G1,G2) and narrow grooves (5) extending circumferentially of the tyre, said narrow grooves (5) having axially outer groove sidewalls (5A) and being disposed in a boundary region between said tread portion (2) and an adjacent buttress portion (3), said narrow grooves (5) being inclined axially inwards at the bottom by an angle β and the tread surface(s) and the surface of the adjacent buttress portion (3) crossing each other to form an intersection point (P), characterised in that said angle β is in the range of 0 to 5 degrees to the normal direction (n) of the tread surface (S) and the radially outer edge of the axially outer groove sidewall (5A) of the narrow groove (5) is positioned at the intersection point (P).

2. A tyre according to claim 1 characterised in that the buttress portion (3) is formed such that the tangent X to the surface of the buttress portion (3) at the intersection point (P) between the tread portion (2) and the buttress portion (3) is inclined at an angle (α) of 25 to 35 degrees with respect to the tangent Y to the tread surface(s) at said intersection point (P).

3. A tyre according to claim 1 or 2 characterised in that the contour of the buttress portion (3) has a circular arc part having a radius R1 of 15 to 35mm adjacent to the intersection point (P) between the tread portion (2) and the buttress portion (3).

4. A tyre according to claim 1, 2 or 3 characterised in that the ratio D1/D of the groove depth D1 of the narrow grooves (5) to the groove depth D of said main grooves (G,G1,G2) is in the range from 0.8 to 1.1.

## Patentansprüche

1. Radialreifen mit einem Laufflächenteil (2), der mit breiten Hauptrillen (G, G1, G2) und schmalen Rillen (5) versehen ist, die sich in Umfangsrichtung des Reifens erstrekken, wobei die schmalen Rillen (5) axial äußere Rillenseitenwände (5A) aufweisen und in einem Grenzbereich zwischen dem Laufflächenteil (2) und einem benachbarten Stützteil (3) angeordnet sind, die schmalen Rillen (5) am Boden unter einem Winkel (β) axial nach innen geneigt sind und die Laufflächenoberfläche (S) und die Oberfläche des benachbarten Stützteils (3) einander kreuzen, um einen Schnittpunkt (P) zu bilden, dadurch gekennzeichnet, daß der Winkel (β) im Bereich von 0 bis 5° zur Normalenrichtung (n) der Laufflächenoberfläche (S) liegt und die radial äußere Kante der axial äußeren Rillenseitenwand (5A) der schmalen Rille (5) am Schnittpunkt (P) angeordnet ist.

2. Reifen nach Anspruch 1, dadurch gekennzeichnet, daß der Stützteil (3) so ausgebildet ist, daß die Tangente X an der Oberfläche des Stützteils (3) am Schnittpunkt (P) zwischen dem Laufflächenteil (2) und dem Stützteil (3) unter einem Winkel (α) von 25 bis 35° hinsichtlich der Tangente Y an der Laufflächenoberfläche (S) beim Schnittpunkt (P) geneigt ist.

3. Reifen nach Anspruch 1 oder 2, dadurch gekennzeichnet, daß die Kontur des Stützteils (3) einen kreisförmigen Bogenteil mit einem Radius R1 von 15 bis 35 mm benachbart dem Schnittpunkte (P) zwischen dem Laufflächenteil (2) und dem Stützteil (3) aufweist.

4. Reifen nach Anspruch 1, 2 oder 3, dadurch gekennzeichnet, daß das Verhältnis D1/D der Rillentiefe D1 der schmalen Rillen (5) zur Rillentiefe D der Hauptrillen (G, G1, G2) im Bereich von 0,8 bis 1,1 liegt.

## Revendications

1. Pneumatique à carcasse radiale, comprenant une partie (2) de bande de roulement ayant des gorges principales larges (G, G1, G2) et des gorges étroites (5) disposées suivant la circonférence du pneumatique, les gorges étroites (5) ayant des parois latérales axialement externes (5A) et étant placées dans une région limite entre la partie (2) de bande de roulement et une partie adjacente de renfort (3), les gorges étroites étant inclinées axialement vers l'intérieur au fond d'un angle (β) et la surface (S) de la bande de roulement et la surface de la partie adjacente de renfort (3) se recoupant pour la formation d'un point d'intersection (P), caractérisé en ce que l'angle (β) est compris entre 0 et 5° par rapport à la direction normale (n) à la surface (S) de la bande de roulement, et le bord radialement externe de la paroi latérale axialement externe (5A) de la gorge étroite (5) est placé au point d'intersection (P).

2. Pneumatique selon la revendication 1, caractérisé en ce que la partie (3) de renfort est formée de manière que la tangente X à la surface de la partie de renfort (3) au point d'intersection (P) entre la partie (2) de bande de roulement et la partie (3) de renfort est inclinée d'un angle (α) de 25 à 35° par rapport à la tangente Y à la surface (S) de la bande de roulement au point d'intersection (P).

3. Pneumatique selon la revendication 1 ou 2, caractérisé en ce que le profil de la partie de renfort (3) a une partie en arc de cercle de rayon R1 compris entre 15 et 35 mm, adjacente au point d'intersection (P) de la partie (2) de bande de roulement et de la partie de renfort (3).

4. Pneumatique selon la revendication 1, 2 ou 3, caractérisé en ce que le rapport D1/D de la profondeur D1 des gorges étroites (5) à la profondeur D des gorges principales (G, G1, G2) est compris entre 0,8 et 1,1.
